# EUROPEAN PATENT APPLICATION

(11) **EP 4 535 850 A1**
(43) Date of publication of application: **09.04.2025**
(21) Application number: 23811205.6
(22) Date of filing: 29.05.2023
(51) Int. Cl.: H04W 24/02

(54) **COMMUNICATION METHOD AND COMMUNICATION APPARATUS**

(30) Priority: 27.05.2022 CN 202210588419
(71) Applicant: Datang Mobile Communications Equipment Co., Ltd., Beijing 100085 (CN)
(72) Inventor: LIU, Xianfeng, Beijing 100085 (CN)
(74) Representative: Studio Torta S.p.A.
(86) International application number: PCT/CN2023/096964
(87) International publication number: WO 2023/227135

(57) **Abstract**

The present disclosure provides a communication method and a communication apparatus. The method includes: receiving first information from an NWDAF node, where the first information includes path information of at least one user plane transmission path, and the path information is used to indicate quality of service (QoS) information and a path type; and determining a first UPF node that provides a service for a protocol data unit (PDU) session based on the first information and service requirements of the PDU session, where the first UPF node meets the service requirements, and the at least one user plane transmission path includes a user plane transmission path associated with the first UPF node.

## Description

This application claims priority to Chinese application No. 202210588419.8, filed with the China National Intellectual Property Administration on May 27, 2022 and entitled "COMMUNICATION METHOD AND COMMUNICATION APPARATUS", the disclosure of which is hereby incorporated by reference in its entirety.

### TECHNICAL FIELD

The present disclosure relates to the field of communication technologies, and in particular, to a communication method and a communication apparatus.

### BACKGROUND

In communication networks, a quality of service (Quality of Service, QoS) monitoring technology is applied for measurement of data packet transmission delay, and the data packet transmission delay in a transmission path is calculated through interaction of measurement messages between communication nodes at user plane tunnel endpoints. For example, a session management function (Session Management Function, SMF) node can perform QoS monitoring of a user plane transmission path to determine whether the data packet transmission delay meets service requirements of a protocol data unit (Protocol Data Unit, PDU) session. The SMF node can instruct a candidate user plane function (User Plane Function, UPF) node to send a measurement message and receive a measurement response message from an access network node to measure the data packet transmission delay of the transmission path. The SMF node selects UPF nodes that meet service requirements for PDU sessions based on the data packet transmission delay feedback from candidate UPF nodes.

However, the above method of interaction of measurement messages requires existence of at least one active PDU session in a relevant path to achieve transferring measurement messages, the one interaction of the measurement messages is not sufficient for obtaining an actual transmission delay of the path, and multiple measurements will cause significant resource overhead and long waiting time. The above method can no longer meet the demand of session management in the current communication network.

### SUMMARY

Embodiments of the present disclosure provide a communication method and a communication apparatus that can improve accuracy and efficiency of session management.

A first aspect provides a communication method, where the method can be performed by an SMF node or a module (such as a chip) configured in (or used for) the SMF node.

The method includes:
receiving first information from an NWDAF node, where the first information includes path information of at least one user plane transmission path, and the path information is used to indicate quality of service (QoS) information and a path type;
determining a first UPF node that provides a service for a protocol data unit (PDU) session based on the first information and service requirements of the PDU session, where the first UPF node meets the service requirements, and the at least one user plane transmission path includes a user plane transmission path associated with the first UPF node.

According to the above scheme, the SMF node can obtain the QoS information and the path type at the user plane transmission path level from the NWDAF node, and perform QoS monitoring of the user plane transmission path. It can avoid the SMF node from configuring a candidate UPF node to exchange measurement messages with access network nodes when selecting a UPF node, and waiting for measurement results, which can reduce resource overhead of obtaining the QoS information, such as transmission resource and time resource overhead. Besides, it can obtain more types of QoS information except data packet transmission delay of the path and improve accuracy of path service quality control, thereby improving the accuracy and efficiency of SMF node session management.

Optionally, in one implementation of the first aspect, the method further includes:
sending second information to the NWDAF node, where the second information is used to request the path information of the at least one user plane transmission path, and the second information includes identification information of the at least one user plane transmission path and/or identification information of at least one candidate UPF node, where the at least one user plane transmission path is a user plane transmission path associated with the at least one candidate UPF node, and the at least one candidate UPF node includes the first UPF node.

Optionally, in one implementation of the first aspect, the second information is carried in an analysis data subscription request message, or, the second information is carried in an analysis data request message.

According to the above scheme, the SMF node can send request information to the NWDAF node through the second information, and then the NWDAF node provides the path information of the at least one user plane transmission path to the SMF node. The second information can be on-demand request information, and the SMF node can request the path information of the at least one user plane transmission path from the NWDAF node when needed. Or, the second information can be a subscription type message, for example, when the SMF node needs to know the path information of the at least one user plane transmission path during a certain period of time, the SMF node can subscribe to the path information of the at least one user plane transmission path from the NWDAF node, which can avoid the SMF node sending request information for many times.

Optionally, in one implementation of the first aspect, the sending the second information to the NWDAF node includes:
receiving third information, where the third information is PDU session establishment request information or PDU session update request information;
determining the at least one candidate UPF node based on the third information;
sending the second information to the NWDAF node.

According to the above scheme, in response to the PDU session establishment request information or PDU session update request information, the SMF node obtains the path information of the user plane transmission path associated with the candidate UPF node from the NWDAF node. Based on the path information, the UPF node that meets the service requirements of the PDU session is selected to provide a service for the PDU session. This may improve the accuracy and efficiency of the SMF node session management.

Optionally, in one implementation of the first aspect, the method further includes:
establishing the PDU session, where a user plane transmission path of the PDU session is a first user plane transmission path associated with the first UPF node in the at least one user plane transmission path.

Optionally, in one implementation of the first aspect, the method further includes:
sending fourth information to an access network node, where the fourth information is used to indicate a path type of the first user plane transmission path.

According to the above scheme, the SMF node determines the path type based on the selected UPF node and the user plane transmission path of the PDU session, and notifies the access network node, so that the access network node can select, based on the path type, a backhaul link that matches the path type notified by the SMF node to establish a transmission path that meets the service requirements of the PDU session.

Optionally, in one implementation of the first aspect, the method further includes:
sending fifth information to a policy control function (PCF) node, where the fifth information is used to request an update of a control policy, and the fifth information includes path information of the first user plane transmission path;
receiving sixth information from the PCF node, where the sixth information is used to indicate an updated control policy.

According to the above scheme, when the SMF node requests the update of the control policy from the PCF node, it can provide the PCF node with the path information of the user plane transmission path obtained from the NWDAF node, so that the PCF node can refer to the path information of the user plane transmission path to update the control policy, enabling the PCF node to provide a higher matching control policy and improving the accuracy of QoS control.

Optionally, in one implementation of the first aspect, the determining the first UPF node that provides a service for the PDU session based on the first information and the service requirements of the PDU session includes:
in the case where the at least one user plane transmission path includes a user plane transmission path that meets the service requirements, determining the first UPF node that provides a service for the PDU session based on the first information and the service requirements;
where the method further includes:
   in the case where the at least one user plane transmission path does not include the user plane transmission path that meets the service requirements, sending seventh information, where the seventh information is used to reject an establishment request of the PDU session.

A second aspect provides a communication method, where the method can be performed by a NWDAF node or a module (such as a chip) configured in (or used for) the NWDAF node.

The method includes: sending first information to a SMF node, where the first information includes path information of at least one user plane transmission path, and the path type is used to indicate quality of service (QoS) information and a path type.

Optionally, in one implementation of the second aspect, the method further includes:
receiving second information from the SMF node, where the second information is used to request the path information of the at least one user plane transmission path, and the second information includes identification information of the at least one user plane transmission path and/or identification information of at least one candidate UPF node, where the at least one user plane transmission path is a user plane transmission path associated with the at least one candidate UPF node.

Optionally, in one implementation of the second aspect, the second information is carried in a data subscription request message, or, the second information is carried in a data request message.

Optionally, in one implementation of the second aspect, the method further includes:
sending eighth information to a network node, where the eighth information is used to subscribe to a QoS measurement result and a path type of the at least one user plane transmission path;
receiving ninth information from the network node, where the ninth information is used to indicate the QoS measurement result and the path type;
determining the path information of at least one user plane transmission path based on the QoS measurement result and the path type.

According to the above scheme, the NWDAF node can obtain QoS measurement results and path types of various user plane transmission paths from the network, and based on the obtained QoS measurement results and path types, perform statistical analysis and/or inference prediction to obtain more accurate and diverse path information of user plane transmission paths. This enables the SMF node to obtain more accurate and diverse path information of user plane transmission paths from the NWDAF node, thereby improving the accuracy and efficiency of the SMF node in terms of session management.

Optionally, in one implementation of the second aspect, the network node is a UPF node or an operation administration and maintenance node.

A third aspect provides a communication apparatus, including a memory, a transceiver, and a processor,
where the memory is configured to store a computer program; the transceiver is configured to transmit and receive data under control of the processor; and the processor is configured to read the computer program from the memory to perform the following operations:
receiving first information from an NWDAF node, where the first information includes path information of at least one user plane transmission path, and the path information is used to indicate the QoS information and a path type;
determining a first UPF node that provides a service for a protocol data unit (PDU) session based on the first information and service requirements of the PDU session, where the first UPF node meets the service requirements, and the at least one user plane transmission path includes a user plane transmission path associated with the first UPF node.

Optionally, in one implementation of the third aspect, the method further includes:
sending second information to the NWDAF node, where the second information is used to request the path information of the at least one user plane transmission path, and the second information includes identification information of the at least one user plane transmission path and/or identification information of at least one candidate UPF node, where the at least one user plane transmission path is a user plane transmission path associated with the at least one candidate UPF node, and the at least one candidate UPF node includes the first UPF node.

Optionally, in one implementation of the third aspect, the second information is carried in an analysis data subscription request message, or the second information is carried in an analysis data request message.

Optionally, in one implementation of the third aspect, the sending the second information to the NWDAF node includes:
receiving third information, where the third information is PDU session establishment request information or PDU session update request information;
determining the at least one candidate UPF node based on the third information;
sending the second information to the NWDAF node.

Optionally, in one implementation of the third aspect, the method further includes:
establishing the PDU session, where a user plane transmission path of the PDU session is a first user plane transmission path associated with the first UPF node in the at least one user plane transmission path.

Optionally, in one implementation of the third aspect, the method further includes:
sending fourth information to an access network node, where the fourth information is used to indicate a path type of the first user plane transmission path.

Optionally, in one implementation of the third aspect, the method further includes:
sending fifth information to a policy control function (PCF) node, where the fifth information is used to request an update of a control policy, and the fifth information includes path information of the first user plane transmission path;
receiving sixth information from the PCF node, where the sixth information is used to indicate an updated control policy.

Optionally, in one implementation of the third aspect, the determining the first UPF node that provides a service for the PDU session based on the first information and the service requirements of the PDU session includes:
in the case where the at least one user plane transmission path includes a user plane transmission path that meets the service requirements, determining the first UPF node that provides a service for the PDU session based on the first information and the service requirements;
where the method further includes:
   in the case where the at least one user plane transmission path does not include the user plane transmission path that meets the service requirements, sending seventh information, where the seventh information is used to reject an establishment request of the PDU session.

A fourth aspect provides a communication apparatus, including a memory, a transceiver, and a processor,
where the memory is configured to store a computer program; the transceiver is configured to transmit and receive data under control of the processor; and the processor is configured to read the computer program from the memory to perform the following operations:
sending first information to a SMF node, where the first information includes path information of at least one user plane transmission path, and the path information is used to indicate quality of service (QoS) information and a path type.

Optionally, in one implementation of the fourth aspect, the method further includes:
receiving second information from the SMF node, where the second information is used to request the path information of the at least one user plane transmission path, and the second information includes identification information of the at least one user plane transmission path and/or identification information of at least one candidate UPF node, where the at least one user plane transmission path is a user plane transmission path associated with the at least one candidate UPF node.

Optionally, in one implementation of the fourth aspect, the second information is carried in a data subscription request message, or, the second information is carried in a data request message.

Optionally, in one implementation of the fourth aspect, the method further includes:
sending eighth information to a network node, where the eighth information is used to subscribe a QoS measurement result and a path type of the at least one user plane transmission path;
receiving ninth information from the network node, where the ninth information is used to indicate the QoS measurement result and the path type;
determining the path information of at least one user plane transmission path based on the QoS measurement result and the path type.

Optionally, in one implementation of the fourth aspect, the network node is a UPF node or an operation administration and maintenance node.

A fifth aspect provides a communication apparatus, including:
a transceiving unit, configured to receive first information from a NWDAF node, where the first information includes path information of at least one user plane transmission path, and the path information is used to indicate quality of service (QoS) information and a path type;
a processing unit, configured to determine a first UPF node that provides a service for a protocol data unit (PDU) session based on the first information and service requirements of the PDU session, where the first UPF node meets the service requirements, and the at least one user plane transmission path includes a user plane transmission path associated with the first UPF node.

Optionally, in one implementation of the fifth aspect, the transceiving unit is further configured to send second information to the NWDAF node, where the second information is used to request the path information of the at least one user plane transmission path, and the second information includes identification information of the at least one user plane transmission path and/or identification information of at least one candidate UPF node, where the at least one user plane transmission path is a user plane transmission path associated with the at least one candidate UPF node, and the at least one candidate UPF node includes the first UPF node.

Optionally, in one implementation of the fifth aspect, the second information is carried in an analysis data subscription request message, or, the second information is carried in an analysis data request message.

Optionally, in one implementation of the fifth aspect, the transceiving unit is further configured to receive third information, where the third information is PDU session establishment request information or PDU session update request information;
where the processing unit is further configured to determine the at least one candidate UPF node based on the third information.

Optionally, in one implementation of the fifth aspect, the processing unit is further configured to establish the PDU session, where a user plane transmission path of the PDU session is a first user plane transmission path associated with the first UPF node in the at least one user plane transmission path.

Optionally, in one implementation of the fifth aspect, the transceiving unit is further configured to send fourth information to an access network node, where the fourth information is used to indicate a path type of the first user plane transmission path.

Optionally, in one implementation of the fifth aspect, the transceiving unit is further configured to:
send fifth information to a policy control function (PCF) node, where the fifth information is used to request an update of a control policy, and the fifth information includes path information of the first user plane transmission path;
receive sixth information from the PCF node, where the sixth information is used to indicate an updated control policy.

Optionally, in one implementation of the fifth aspect, the processing unit is specifically configured to determine the first UPF node that provides a service for the PDU session based on the first information and the service requirements, in the case where the at least one user plane transmission path includes a user plane transmission path that meets the service requirements;
the transceiving unit is further configured to send seventh information, in the case where the at least one user plane transmission path does not include the user plane transmission path that meets the service requirements, where the seventh information is used to reject an establishment request of the PDU session.

A sixth aspect provides a communication apparatus, including:
a processing unit, configured to determine first information, where the first information includes path information of at least one user plane transmission path, and the path information is used to indicate quality of service (QoS) information and a path type;
a transceiving unit, configured to send the first information to a SMF node.

Optionally, in one implementation of the sixth aspect, the transceiving unit is further configured to receive second information from the SMF node, where the second information is used to request the path information of the at least one user plane transmission path, and the second information includes identification information of the at least one user plane transmission path and/or identification information of at least one candidate UPF node, where the at least one user plane transmission path is a user plane transmission path associated with the at least one candidate UPF node.

Optionally, in one implementation of the sixth aspect, the second information is carried in a data subscription request message, or, the second information is carried in a data request message.

Optionally, in one implementation of the sixth aspect, the transceiving unit is further configured to send eighth information to a network node, where the eighth information is used to subscribe to a QoS measurement result and a path type of the at least one user plane transmission path; and receive ninth information from the network node, where the ninth information is used to indicate the QoS measurement result and the path type;
the processing unit is further configured to determine the path information of at least one user plane transmission path based on the QoS measurement result and the path type.

Optionally, in one implementation of the sixth aspect, the network node is a UPF node or an operation administration and maintenance node.

A seventh aspect provides a processor readable storage medium, where the processor readable storage medium stores a computer program, and the computer program causes a processor to execute the method as provided in the first or second aspect and any possible implementation of the first or second aspect.

A eighth aspect provides a computer program product, where the computer program product includes computer program codes (or instructions) which, when executed by one or more processors, cause an apparatus including the processor(s) to perform the method as provided in the first or second aspect and any possible implementation of the first or second aspect.

A ninth aspect provides a communication system, including a communication apparatus provided for executing the third aspect and any possible implementation of the third aspect, and further including a communication apparatus provided for executing the fourth aspect and any possible implementation of the fourth aspect.

### BRIEF DESCRIPTION OF DRAWINGS

FIG. 1 is a schematic diagram of a communication system architecture applicable to an embodiment of the present disclosure.
FIG. 1A is another schematic diagram of a communication system architecture applicable to an embodiment of the present disclosure.
FIG. 2 is a schematic flowchart of a PDU session establishment process provided in an embodiment of the present disclosure.
FIG. 3 is a schematic flowchart of a PDU session update process provided in the present disclosure.
FIGs. 4 to 6 are interactive flowcharts of communication methods provided in embodiments of the present disclosure, respectively.
FIGs. 7 and 8 are schematic structural diagrams of communication apparatuses provided in embodiments of the present disclosure, respectively.
FIGs. 9 and 10 are another schematic structural diagrams of communication apparatuses provided in embodiments of the present disclosure.

### DESCRIPTION OF EMBODIMENTS

In order to describe objections, technical solutions, and advantages of embodiments of the present disclosure more clearly, the technical solutions in the embodiments of the present disclosure will be described hereunder clearly and comprehensively with reference to the accompanying drawings in the embodiments of the present disclosure. Apparently, the described embodiments are only a part of embodiments of the present disclosure, rather than all embodiments of the present disclosure. All other embodiments obtained by persons of ordinary skill in the art based on the embodiments of the present disclosure without any creative effort shall fall into the protection scope of the present disclosure.

The "/" in the description, the claims, and drawings of the embodiments of the present disclosure may indicate a "or" relationship between the associated objects, for example, A/B may represent A or B; "and/or" can be used to describe three types of relationships between associated objects, for example, A and/or B may represent three cases: A exists alone, A and B exist simultaneously, and B exists alone, where A and B can be singular or plural. And, the terms "first", "second", etc., are used to distinguish similar objects and do not necessarily describe a specific order or sequence. It should be understood that data used in this way can be interchanged in appropriate circumstances, so that the embodiments of the present disclosure described herein can be implemented in an order other than those illustrated or described herein. In addition, terms "including" and "having", as well as any variations thereof, are intended to cover non-exclusive inclusions, for example, a process, a method, a system, a product or a device including a series of steps or units need not be limited to those steps or units that are clearly listed. Instead, it may include other steps or units that are not clearly listed or are inherent to the process, method, product or device.

The technical solutions of the present disclosure will be described below with reference to the drawings.

The technical solutions provided in the embodiments of the present disclosure may be applicable to various systems and, in particular, to a 5G system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. The various systems all include a terminal device and a network device, and further include a core network part, such as an evolved packet system (Evolved Packet System, EPS), a 5G system (5GS), etc.

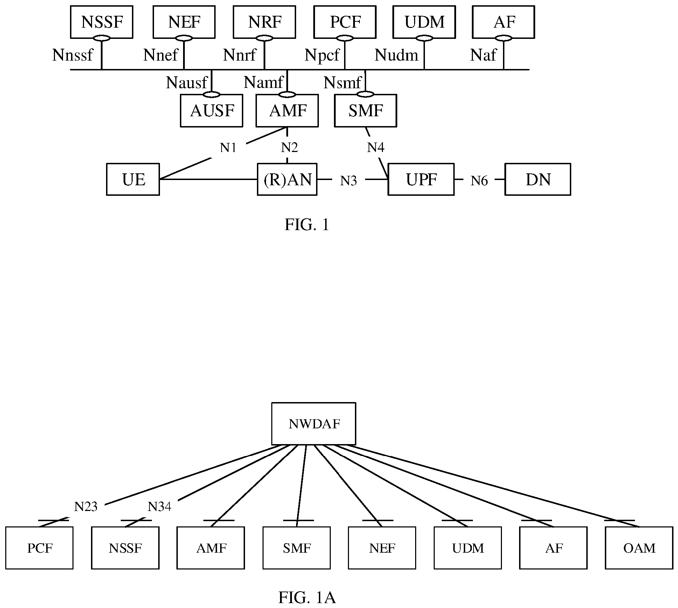

FIG. 1 is a schematic diagram of a system architecture applicable to an embodiment of the present disclosure.

As shown in FIG. 1, the 5G core network (5G core, 5GC, or new generation core, NGC) includes access and mobility management function (access and mobility management function, AMF) nodes, session management function (session management function, SMF) nodes, user plane function (user plane function, UPF) nodes, authentication server function (authentication server function, AUSF) nodes, policy control function (policy control function, PCF) nodes, application function (application function, AF) nodes, unified data management (unified data management, UDM) nodes, network slice selection function (network slice selection function, NSSF) nodes, network exposure function (Network Exposure Function, NEF) nodes and network repository function (Network Repository Function, NRF) nodes and other function nodes.

The AMF nodes are mainly responsible for mobility management, access management and other services. The SMF nodes are mainly responsible for session management, terminal device address management and assignment, dynamic host configuration protocol functions, selection and control of user plane functions, etc. The UPF nodes are mainly responsible for externally connecting to the data network (Data Network, DN), packet routing and forwarding and packet filtering of the user plane and performing quality of service (Quality of Service, QoS) control, and other functions. The UDM nodes are mainly responsible for storing subscription data, credentials (credential), and subscriber permanent identifiers (Subscriber Permanent Identifier, SUPI) of subscription terminal devices in the network. A service-oriented interface provided is Nudm. The data can be used to authenticate and authorize terminal devices to access the carrier network. The AUSF nodes mainly provide an access authentication function and other functions, and a service-oriented interface provided by the AUSF node is Nausf. The PCF nodes are mainly responsible for providing a unified policy framework for network behavior management, providing policy rules for control plane functions, obtaining registration information related to policy decisions, and a service-oriented interface provided is Npcf. It should be noted that these functional units can work independently or be combined together to implement certain control functions, such as access control and mobility management functions such as terminal device access authentication, security encryption, and location registration, and session management functions such as establishing, releasing, and changing user plane transmission paths. The NSSF nodes can select a group of network slice instances for the UE, and a service-oriented interface provided by the NSSF nodes is Nnssf. The NEF nodes can open network capabilities and events, obtain external application information from the AF nodes, and store information for external opening in a unified data repository (Unified Data Repository, UDR). A service-oriented interface provided by the NEF nodes is Nnef. The NRF nodes can provide service registration, discovery, and authorization, and maintain available network function (Network Function, NF) instance information, and a service-oriented interface provided by the NRF node is Nnrf interface.

As shown in FIG. 1, the UE can transmit control plane messages with the AMF node through a next generation (Next Generation, NG) interface 1 (N1 for short), the (R)AN node can establish a user plane data transmission channel with the UPF through a NG interface 3 (N3 for short), the RAN node can establish a control plane signaling connection with the AMF node through a NG interface 2 (N2 for short), the UPF can exchange information with the SMF node through a NG interface 4 (N4 for short), and the UPF can exchange user plane data with data network (DN) through a NG interface 6 (N6 for short). Moreover, the AMF node can exchange information with the SMF node through a NG interface 11 (N11 for short), the SMF node can exchange information with the PCF node through a NG interface 7 (N7 for short), and the AMF node can exchange information with the AUSF node through a NG interface 12 (N12 for short). It should be noted that FIG. 1 is only an exemplary architecture diagram, and in addition to the function units shown in FIG. 1, the network architecture may also include other function units.

In a communication system, two RAN nodes can communicate with each other through the Xn interface, or if they cannot communicate with each directly, they can communicate with each through the forwarding of the AMF node, that is, indirectly interact with each through the N2 interface. In wireless access scenarios, the terms access network (Access Network, AN) and radio access network (RAN) may not be distinguished.

The communication system also includes a network data analytics function (Network Data Analytics Function, NWDAF) node which is a data aware analysis node that can automatically sense and analyze the network based on network data, and participate in network planning, construction, operation, ect. As shown in FIG. 1A, the NWDAF node can interact with multiple network nodes such as the PCF node, the NSSF node, the AMF node, the SMF node, the NEF node, the UDM node, the AF node, and the OAM node to obtain network data and perform data analysis for optimizing the network and services.

The terminal device involved in the embodiments of the present disclosure may be a device that provides voice and/or data connectivity to users, a handheld device with a wireless connection function, other processing devices connected to a wireless modem, or the like. In different systems, a name of a terminal device may be different. For example, in a 5G system, a terminal device can be called a user equipment (User Equipment, UE). A wireless terminal device can communicate with one or more core networks (Core Network, CN) via a radio access network (Radio Access Network, RAN). A wireless terminal device can be a mobile terminal device, such as a mobile phone (or a "cellular" phone) and a computer with a mobile terminal device, such as a portable, pocket-sized, hand-held, computer-built or vehicle-mounted mobile device, which exchanges languages and/or data with the radio access network, for example, a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA) , etc. The wireless terminal device can also be called a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent) or a user device (user device), which is not limited in the embodiments of the present disclosure.

A network device related in an embodiment of the present disclosure may be a base station, where the base station may include multiple cells that provide services for terminals. According to different specific application occasions, the base station may also called as an access point, or may refer to devices in communication with the wireless terminal devices through one or more sectors in an air interface in an access network, or devices with other names. The network device may be configured to interconvert a received air frame and an internet protocol (internet protocol, IP) packet and serves as a router between the wireless terminal devices and remaining parts of the access network, where the remaining parts of the access network may include an internet protocol (IP) communication network. The network device may further coordinate attribute management to the air interface. For example, the network devices involved in the embodiments of the present application may be network devices (Base Transceiver Station, BTS) in the global system for mobile communications (Global System for Mobile Communications, GSM) or code division multiple access (Code Division Multiple Access, CDMA), or network devices (NodeB) in wide-band code division multiple access (Wide-band Code Division Multiple Access, WCDMA), or evolutional network devices (evolutional Node B, eNB or e-NodeB) in a long term evolution (long term evolution, LTE) system, or a 5G base station (gNB) in a 5G network architecture (next generation system), or a home evolved node B (Home evolved Node B, HeNB), a relay node (relay node), a femto (femto), a pico (pico), etc., which is not limited in the embodiments of the present disclosure. In some network structures, the network device may include a centralized unit (centralized unit, CU) node and a distributed unit (distributed unit, DU) node, and the centralized unit and the distributed unit may also be geographically separated.

Relevant technologies and terms involved in the present disclosure are described below.

### 1, protocol data unit (Protocol Data Unit, PDU) session establishment process

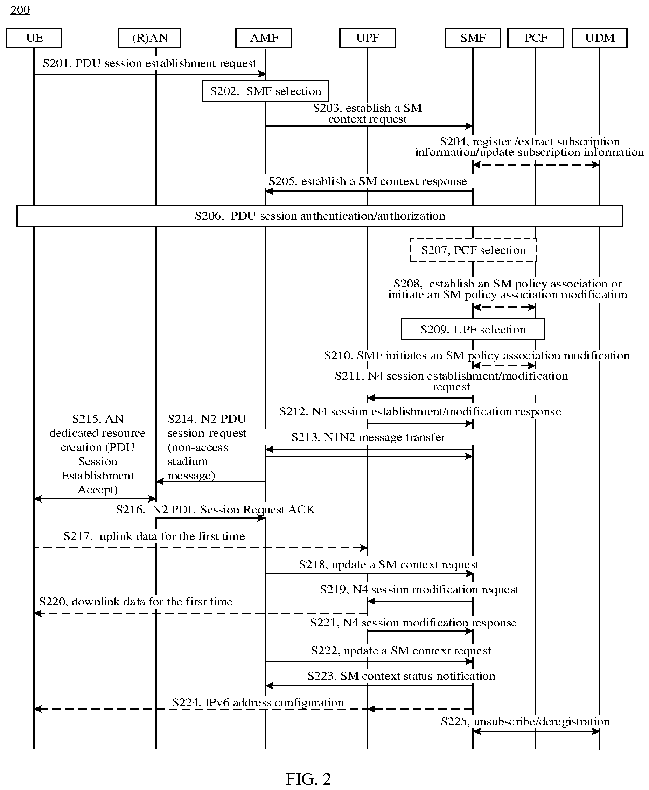

The following is a brief description of the PDU session establishment process in combination with the schematic flowchart of the PDU session establishment process 200 shown in FIG. 2.

As shown in FIG. 2, a UE can initiate a PDU session establishment request to the network by sending a PDU session establishment request message (Session Establishment Request) to an AMF node in S201. The PDU session establishment request message can include a PDU session ID (Session ID) that UE requests for establishment. It may also include, but is not limited to, a DNN value, single network slice selection assistance information (Single Network Slice Selection Assistance Information, S-NSSAI), and other information. After receiving the session establishment request message from the UE, the AMF node executes S202 to select a SMF node for the session establishment request. And in S203, the AMF sends a session management context establishment request message (Nsmf_PDUSession_CreateSMcontext Request) to the SMF node selected for the session establishment request. After the SMF node receives the request message, in S204, UE registration information and/or subscription information is extracted from the UDM node, and the UE subscription information is updated based on the PDU session establishment request initiated by the UE. The SMF node sends a session management context establishment response message (Nsmf_PDUSession_CreateSMcontext Response) to the AMF node in S205 to notify the AMF node of whether a session management (Session Management, SM) context (context) being established successfully.

After the SM context is successfully established, the UE completes PDU session authentication/authorization with various nodes in the network in S206. The SMF node then selects the PCF node in S207, and based on the PDU session request type, sends a policy control request to the PCF node to establish an SM policy association or the SMF node initiates an SM policy association modification process in S208. According the request of the SMF node, the PCF node sends policy control information, including policy and charging control (Policy and Charging Control, PCC) rules and quality of service (Quality of Service, QoS) features. The SMF node selects the UPF node for the PDU session in S209 to establish the user plane transmission path for the PDU session. If the UPF node selected by the SMF node meets the triggering conditions for the policy control request, the SMF node initiates an SM policy association modification process to the PCF node in S210. In S211, the SMF node sends an N4 session establishment/modification request message (N4 Session Establishment/Modification Request) to the selected UPF node to establish an N4 session, and the UPF node returns an N4 session establishment/modification response message (N4 Session Establishment/Modification Response) to the SMF node in S212. The SMF node sends an N1N2 message transfer message (Namf_Communication-1N2MessageTransfer) to the AMF node in S213, where the message carries a N1 SM container (container) and N2 SM information (information). The N1 SM container contains the PDU session establishment result sent by the SMF node to the UE, and the N2 SM information is the resource establishment request message sent by the SMF node to the (R)AN node. The AMF node sends an N2 PDU session request message (N2 PDU Session Request message) to the (R)AN node in S214, which carries the CN tunnel endpoint information assigned by the UPF node and a non-access layer message (NAS msg), which includes the PDU session ID and the N1 SM container (PDU session establishment accept message (PDU Session Establishment Accept)). The (R)AN node and UE perform AN dedicated resource creation in S215, and the (R)AN node forwards the NAS msg to the UE. In S216, the (R)AN node returns an N2 PDU session request ACK message (N2 PDU Session Request ACK) to the AMF node, which includes the PDU session ID, N2 SM information (such as AN tunnel information, QoS flow indicator (QoS flow indicator, QFI), etc.). At this point, the uplink data channel of the UE is established, and the UE can send uplink data to the network for the first time in S217. In S218, the AMF node sends an update SM context request message (Nsmf-PDUSession-UupdateSMcontext Request) to the SMF node, which carries the AN tunnel endpoint information of the (R)AN node. The SMF node initiates an N4 session modification request message (N4 Session Modification Request) to the UPF node in S219, which carries AN tunnel endpoint information. After the UPF node obtains the AN tunnel endpoint information, the downlink data channel is established. The UPF node sends an N4 session modification response message (Session Modification Response) to the SMF node in S220. In S222, the SMF node sends an update SM context response message (Nsmf_PDUSession_UpdateSMcontext Response) to the AMF node. In S223, the AMF node sends an Nsmf_PDUSession_SM context status notification message (Nsmf_PDUSession_SMcontextStatusNotify) to the SMF node. If the UE requests to establish a PDU session of the type of the internet protocol version 6 (Internet Protocol Version 6, IPv6), the SMF node configures the UE with an IPv6 address through the AMF node in S224. If the SMF node fails to establish a PDU session after S204, the SMF node needs to execute an unsubscribe/deregistration process initiated with UDM nodes in S225.

### 2, protocol data unit (Protocol Data Unit, PDU) session update process

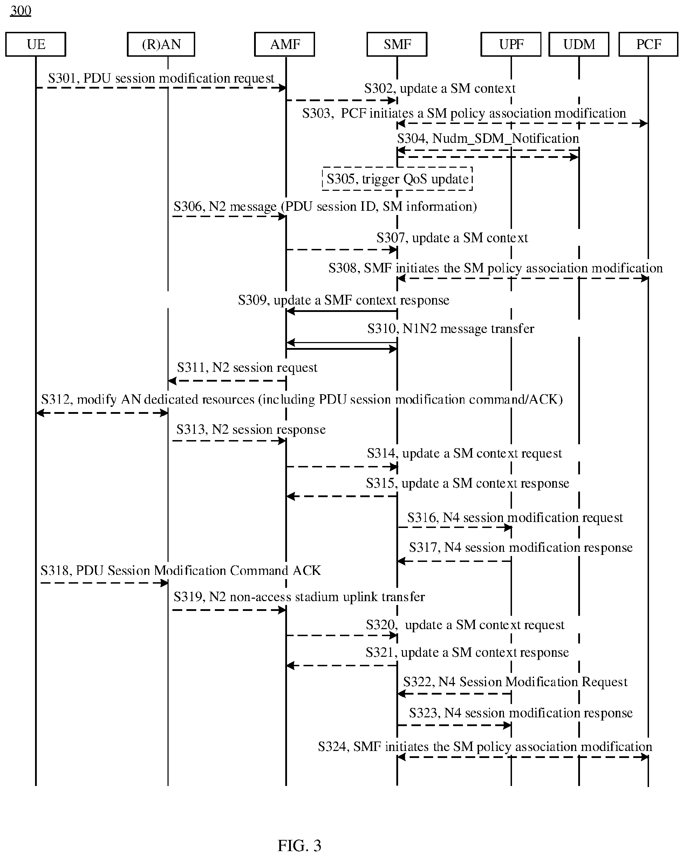

The following is a brief description of the PDU session update process in combination with the schematic flowchart of PDU session update process 300 shown in FIG. 3.

As shown in FIG. 3, the UE can initiate a PDU session modification request, for example, the UE can send a PDU session modification request message (PDU Session Modification Request) to the AMF node in S301. The AMF node updates a session management context message (Nsmf-PDUSession-UupdateSMcontext) in S302, which includes a PDU session modification request from the UE. The SMF node can request policy association modification from the PCF node, and then, the PCF initiates a SM policy association modification process in S303 and sends the modified policy information to the SMF node. If the SMF node requests to modify the policy association, the UDM node updates the SMF subscription information through a Nudm_SDM_Notification message (Nudm_SDM_Notification), and the SMF node returns an update confirmation message after updating the subscription information. The SMF node can execute triggering QoS update in S305, and the QoS update can also be triggered by the (R)AN node. The (R)AN can initiate a PDU session modification request, for example, the (R)AN node can send a N2 message (N2 message) to the AMF node in S306, which includes an PDU session ID and SM information, where the N2 SM information includes QFI, user location information, and instructions for releasing QoS flows. The AMF node can forward the N2 SM information to the SMF node by updating the session management context message (Nsmf_PDUSession_UpdateSMcontext). The SMF node can initiate the SM policy association modification process to the PCF node in S308. The SMF node manages the context response message (Response of Nsmf_PDUSession_UpdateSMcontext) through updating the session. For PDU session update initiated by the SMF, the SMF node can send a N1N2 message transfer message (Namf_Communication_N1N2MessageTransfer) to the AMF node in S310, where the message includes a N1 SM container and N2 SM information, to send a N2 session request message (N2 Session Request) to the (R)AN node through the AMF node and to notify the (R)AN node and the UE the PDU session updated by the SMF node, the (R)AN node and the UE modify AN dedicated resources in S312, including PDU session modification command/ACK (PDU Session Modification Command/ACK) and the like. Then, the (R)AN node sends an N2 session response message (N2 Session Response) to the AMF node in S313. The AMF node notifies the SMF node of the N2 SM information received from the AN through updating a SM context request message (Nsmf_PDUSession_UpdateSMcontext Request) in S314. The SMF node sends a response message (Nsmf_PDUSession_UpdateSMcontext Response) to the AMF node in S315. The SMF node notifies the UPF node of the updated N4 session through N4 session modification request message (N4 Session Modification Request) in S316, and the UPF node sends the N4 session modification response message (N4 Session Modification Response) to the SMF node in S317. The UE can send a PDU session modification command ACK message (PDU Session Modification Command ACK) in S318 and send it to the AMF node through a N2 non-access stadium uplink transfer message (N2 NAS uplink transfer). The AMF node then notifies the SMF node in S320, and the SMF node responds thereto in S321 and notifies the UPF node in S322 and receives a modification response from the UPF node. If the SMF node interacts with the PCF node in S303, the SMF node executes the SM policy association modification process initiated by the SMF in S324.

### 3, QoS monitoring (monitoring)

A user plane transmission path of a PDU session may include one or more UPF nodes, which include a PDU session anchor (PDU session anchor, PSA) UPF node. The PSA UPF node is a UPF node connected to the DN through the N6 interface, and can realize the connection between the core network and the external data network. The intermediate-UPF (Intermediate-UPF, I-UPF) can be included between the AN and the PSA UPF node. The QoS monitoring technology is applied to packet delay measurement. The QoS monitoring of uplink (uplink, UL)/downlink (downlink, DL) packet delay between the (R)AN node and the PSA UPF node can be performed at different granularities which includes QoS flow, UE, or general packet radio service (General Packet Radio Service, GPRS) tunneling protocol user plan (Tunneling Protocol User Plan, GTP-U) path. The granularity of the QoS monitoring depends on the configuration of the operator, and/or third-party application requests, and/or the PCF policy control of ultra-reliable and low latency communications (Ultra-reliable and Low Latency Communications, URLLC) services.

For QoS monitoring of the GTP-U path, the GTP-U sender can estimate RTT (Round-trip time, round-trip time) of data in the GTP-U path by sending an Echo message and measuring an interval between sending Request message and receiving a Response message.

When a satellite link is used for backhaul between the base station (gNB) and the core network, there may be various types of satellite connections between the gNB and the core network, such as geostationary earth orbit satellite (Geostationary Earth Orbit Satellite, GEO), low earth orbit satellite (Low Earth Orbit Satellite, LEO), a LEO connection via an inter-satellite link (Inter-Satellite Link, ISL). The SMF node can instruct the UPF node to enable QoS monitoring to monitor packet delays of various types of satellite backlinks. The SMF nodes select UPF nodes that meet service requirements based on the QoS monitoring results returned by the UPF nodes to establish PDU sessions. As shown in FIG. 1, after receiving the PDU session establishment request message from the user in S201, the AMF node determines that the user plane of (R)AN node (such as gNB) serving the UE may use satellites as the backlink. Then, when the AMF forwards the PDU session establishment request message to the SMF node, the message carries a backhaul link type indication, and then notifies the SMF node that the gNB may use a satellite as a backhaul link and notifies the ID of the gNB to the SMF node. When the SMF node establishes an SM policy association in S208, it provides a backhaul type indication to the PCF node. Based on the backhaul type indication, the PCF node considers that the PDU session of the UE may use satellite backhaul, generates PCC rules, and activates QoS monitoring. If the PCF node allow QoS degradation, alternative (alternative) QoS may also be provided to the SM node.

The SMF node determines a candidate UPF node based on location information of the UE, S-NSSAI, DNN, and other information, and determines to execute the QoS monitoring of the GTP-U path between the gNB and the candidate UPF node based on the backhaul type indication provided by the AMF node. The SMF node notifies each candidate UPF node to execute GTP-U path monitoring to the gNB identified by the gNB ID through the N4 association update process. Each candidate UPF node confirms to execute the GTP-U path monitoring and sends Echo request messages to the gNB, separately. After receiving the Echo request message, the gNB sends an Echo response message to the corresponding candidate UPF node. The gNB may provide satellite information for the backhaul link of the GTP-U path in the Echo response message, such as a type of satellite (LEO, Medium Earth Orbit (Medium Earth Orbit, MEO), GEO, etc.).

Each candidate UPF node obtains the data packet transmission delay according to the Echo request message and the received Echo response message, and reports the measured data packet transmission delay to the SMF node. The SMF node selects the UPF node that meets the requirement for the PDU session based on the data packet transmission delay reported by each candidate UPF node.

The above method of obtaining data packet transmission delay through Echo message interaction between the UPF node and the gNB requires at least one active PDU session in the relevant path to achieve transferring the Echo message. Moreover, one measurement is not sufficient to obtain the actual transmission delay of the path, and multiple measurements will result in large resource overhead and long waiting time. In addition, this method can only obtain the data packet transmission delay of the transmission path and cannot obtain other QoS information such as a transmission rate, a packet loss rate, a bit error rate, etc. This method cannot meet the current demand for the QoS monitoring technology in communication networks.

The present disclosure proposes that SMF node can obtain the path information at the user plane transmission path level from the NWDAF node, and based on the path information statistically obtained and predicted by the NWDAF node, it can obtain more QoS information except the data packet transmission delay of the path, which can improve the accuracy and efficiency of session management.

The communication method provided in the embodiment of the present disclosure will be described below in conjunction with the drawings.

It should be understood that in the embodiment of the present disclosure, the SMF node and the NWDAF node performing the communication method provided in the present disclosure is taken as an example for illustration, however, the present disclosure does not limit an executive subject and a name of the subject that executes the communication method provided in the present disclosure. Other nodes or entities that can implement the corresponding functions of the communication method provided in the embodiment of the present disclosure should fall within the protection scope of the present disclosure.

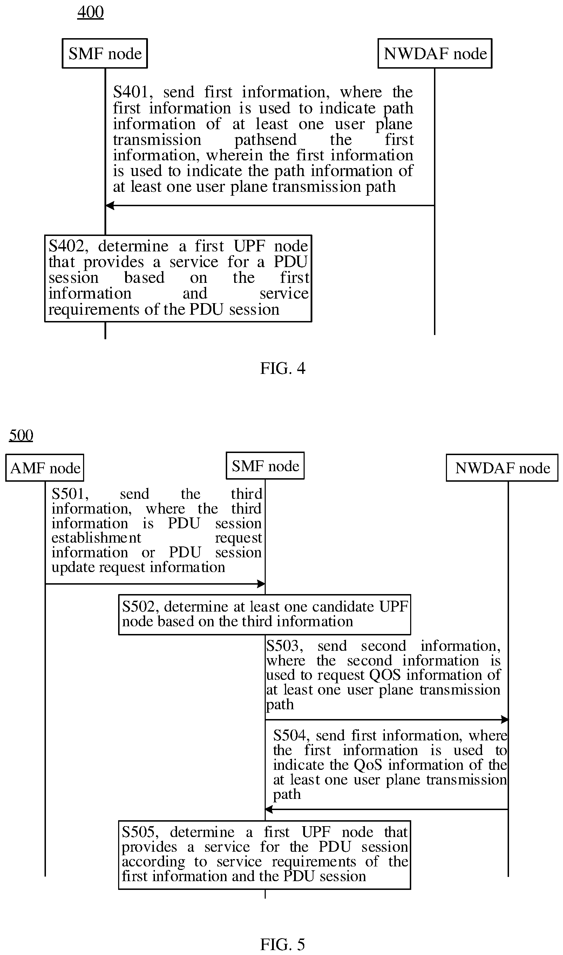

FIG. 4 is a schematic flowchart of a communication method 400 provided in an embodiment of the present disclosure. The communication method 400 includes but is not limited to the following steps.

S401, the NWDAF node sends first information to the SMF node, where the first information is used to indicate path information of at least one user plane transmission path.

Where the path information is used to indicate the QoS information and the path type. Correspondingly, the SMF node receives the first information from the NWDAF node and determines the QoS information and the path type of the at least one user plane transmission path according to the first information.

The SMF node can obtain the path information of the user plane transmission paths from the NWDAF node, so that SMF node can select an appropriate UPF node for a PDU session based on the obtained path information of the user plane transmission path.

As an example without limitation, the user plane transmission path can be a GTP-U path.

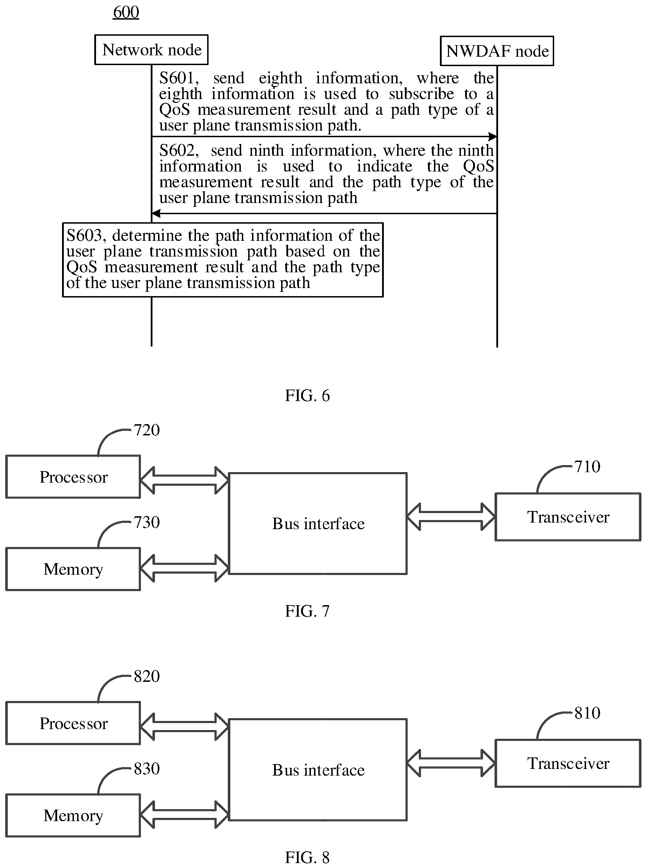

The QoS information of the user plane transmission path may include but is not limited to one or more of packet delay information, a packet loss rate, an error rate, and a transmission bandwidth of the user plane transmission path. The path type of the user plane transmission path can be the type of satellite backhaul link. For example, the path types may include, but are not limited to the GEO, the MEO, the LEO, and the LEO through the ISL, but the present disclosure is not limited to this. The NWDAF node can obtain the path information of the user plane transmission path through the example provided in FIG. 6, and it should be understood that the present disclosure is not limited thereto.

Optionally, the SMF node sends second information to the NWDAF node, where the second information is used to request the path information of the at least one user plane transmission path.

Before receiving the first information, the SMF node can send second information to the NWDAF node, and request the path information of at least one user plane transmission path from the NWDAF node through the second information.

In one implementation, the second information is carried in a data subscription request message.

The SMF node can subscribe the path information of the at least one user plane transmission path from the NWDAF node through the second information. After receiving the data subscription request message, the NWDAF node can periodically send the QoS information of the at least one user plane transmission path to the SMF node. For example, the first information is the QoS information of the at least one user plane transmission path sent by the NWDAF node to the SMF node within one cycle. Alternatively, after the SMF node subscribes to the QoS information of the at least one user plane transmission path, the NWDAF node can send the first information to the SMF node to notify the SMF node of the updated QoS information of the at least one user plane transmission path when the QoS information of the at least one user plane transmission path changes, which is not limited by the present disclosure.

For example, the second information can be specifically carried in a subscription analysis request message (for example, the message can be referred to as Nnwdaf_AnalyticsSubscription_Subscribe). Correspondingly, the first information sent by the NWDAF node can be carried in the subscription analysis notification message (for example, the message can be referred to as Nnwdaf_AnalyticsSubscription_Notify).

In another implementation, the second information is carried in a data request message.

The SMF node can send the data request message to the NWDAF node on demand to request path information of at least one user plane transmission path through the second information in the data request message.

As an example and without limitation, the second information can be specifically carried in an analysis data request message (for example, the message can be referred to as Nnwdaf_AnalyticsInfo_Request). The first information sent by the NWDAF node in response to the analysis data request message can be carried in the analysis information request response message (for example, the message can be referred to as Nnwdaf_AnalyticsInfo_Request Response).

Optionally, the second information includes identification information of the at least one user plane transmission path and/or identification information of at least one candidate UPF node, where the at least one user plane transmission path is a user plane transmission path associated with the at least one candidate UPF node.

The second information may include matching condition information, such as the identification information of the user plane transmission path and/or the identification information of the UPF node, so that the NWDAF node can determine the at least one user plane transmission path for the SMF node to request QoS information through filter.

For example, if the SMF node needs to subscribe to or obtain QoS information about the paths of N candidate UPF nodes, the SMF node can send second information containing the identification information of each UPF node among the N candidate UPF nodes to the NWDAF node. One UPF node is associated with one or more user plane transmission paths. After receiving the second information, the NWDAF node determines the identification information of the user plane transmission path requested by the SMF node to be associated with each of the N candidate UPF nodes based on the identification information of the N candidate UPF nodes in the second information, where N is a positive integer. The first information sent by the NWDAF node to the SMF node includes path information of M user plane transmission paths, where the M user plane transmission paths are all user plane transmission paths associated with each of the N candidate UPF nodes, where M is greater than or equal to N. But the present disclosure is not limited thereto.

For another example, the SMF node can directly indicate the M user plane transmission paths that require QoS information through the second information, where the second information includes the identification information of the M user plane transmission paths, where M is a positive integer. The NWDAF node determines the M user plane transmission paths for the SMF node to request QoS information based on the identification information in the second information. The first information sent by the NWDAF node includes the path information of the M user plane transmission paths. But the present disclosure is not limited thereto.

For another example, the second information may include identification information of at least one candidate UPF node and identification information of at least one user plane transmission path. For example, the SMF node requests QoS information of all user plane transmission paths of the candidate UPF nodes corresponding to the identification information through the identification information of the UPF node in the second information, and notifies, through the identification information of at least one user plane transmission path in the second information, the NWDAF node that it also requests path information of the user plane transmission path corresponding to the identification information. But the present disclosure is not limited thereto.

S402, the SMF node determines a first UPF node that provides a service for a PDU session based on the first information and service requirements of the PDU session.
where the first UPF node meets the service requirements of the PDU session, and the at least one user plane transmission path indicated by the first information includes a user plane transmission path associated with the first UPF node.

After receiving the first information from the NWDAF node, the SMF node determines the first UPF node that meets the service requirements of the PDU session based on the path information of the at least one user plane transmission path provided by the first information.

Optionally, in the embodiment shown in FIG. 4, the first UPF node can be a PSA UPF node or an I-UPF node.

For example, the embodiment shown in FIG. 4 can be applied to the PDU session establishment process. Based on the path information of at least one user plane transmission path obtained from the NWDAF node, the SMF node selects the PSA UPF node that meets the service requirements for the PDU session, namely the first UPF node.

For another example, the embodiment shown in FIG. 4 can be applied to the PDU session update process. If the SMF node determines that an I-UPF node needs to be inserted or replaced for the PDU session, the SMF node can determine the first UPF node as the I-UPF node based on the path information of at least one user plane transmission path obtained from the NWDAF node.

According to the above scheme, the SMF node can obtain the path information of at least one user plane transmission path from the NWDAF node, which can reduce the transmission resource overhead and waiting time overhead caused by the SMF node through configuring multiple candidate UPF nodes to interact Echo messages with access network nodes. More types of QoS information except transmission delay can be obtained from the NWDAF node, thereby improving the accuracy and efficiency of session management.

FIG. 5 is a schematic flowchart of a communication method 500 provided in an embodiment of the present disclosure. The communication method 500 includes but is not limited to the following steps.

S501, the SMF node receives third information, where the third information is PDU session establishment request information or PDU session update request information.

For example, the UE can send the third information to the AMF node, and the AMF node can send the third information from the UE (that is, PDU session establishment request information or PDU session update request information) to the SMF node.

S502, the SMF node determines at least one candidate UPF node based on the third information.

For example, the SMF node can obtain the third information from the UE through the Nsmf_PDU session_SM context establishment request message from the AMF node, where the message also includes UE location information, S-NSSAI, DNN information, and other information. The SMF node can determine at least one candidate UPF node based on, but not limited to, one or more of the UE location information, the S-NSSAI, and the DNN information. If the third information is the PDU session establishment request information, the SMF node can determine at least one candidate UPF node for establishing the PDU session based on the UE location information, the S-NSSAI, and the DNN information. Alternatively, the third information is PDU session update request information, for example, when the UE sends PDU session update request information after UE location changes, the SMF node determines that it needs to insert or replace the I-UPF node based on UE location information. The SMF node determines at least one candidate UPF node for inserting or replacement. But the present disclosure is not limited thereto.

S503, the SMF node sends second information to the NWDAF node, where the second information is used to request path information of at least one user plane transmission path.

As an example without limitation, the second information includes identification information of the at least one user plane transmission path and/or identification information of the at least one candidate UPF node.

Among them, the at least one user plane transmission path is a user plane transmission path associated with the at least one candidate UPF node, one user plane transmission path is associated with one candidate UPF node, and one candidate UPF node can be associated with one or more user plane transmission paths indicated by the second information.

S504, the NWDAF node sends first information to the SMF node, where the first information includes the path information of the at least one user plane transmission path.

Among them, the path information is used to indicate QoS information and a path type. Correspondingly, the SMF node receives the first information from the NWDAF node.

For example, the third information is PDU session establishment request information, which can refer to the PDU session establishment process shown in FIG. 2. Before selecting the UPF node in S209, the SMF node performs S503 and S504 to obtain path information of at least one user plane transmission path from the NWDAF node, and based on the path information of the at least one user plane transmission path, selects the UPF node that meets the service requirements.

For another example, if the third information is PDU session update request information, the SMF node can send the second information to the NWDAF node after determining at least one candidate UPF node to insert or replace the I-UPF node, and receive the first information from the NWDAF node to obtain the path information of the at least one user plane transmission path, so as to select the UPF node that meets the service requirements based on the path information of the at least one user plane transmission path.

S505, the SMF node determines a first UPF node that meets service requirements of the PDU session based on the path information of the at least one user plane transmission path.

If the third information is PDU session establishment request information and the SMF node includes a user plane transmission path that meets the service requirements of the PDU session in at least one user plane transmission path, it determines the first UPF node that meets the service requirements based on the first information and the service requirements of the PDU session. If the at least one user plane transmission path does not include a user plane transmission path that meets the service requirements, the SMF node sends seventh information which is used to reject the PDU session establishment request.

For example, the SMF node selects the UPF node for the PDU session based on the PDU session establishment request information obtained from the UE from the AMF node to establish the PDU session. Based on the path information of the at least one user plane transmission path obtained from the NWDAF node, the SMF node determines whether the at least one user plane transmission path includes a user plane transmission path that meets the service requirements of the PDU session. For example, the SMF node can determine whether the at least one user plane transmission path includes a user plane transmission path that meets service requirements based on DNN and/or S-NSSAI from the UE. If the at least one user plane transmission path includes the user plane transmission path that meets the service requirements, the SMF node selects the first UPF node that meets the service requirements based on the path information; and if the at least one user plane transmission path does not include the user plane transmission path that meets the service requirements, the SMF node cannot select a UPF node that meets the service requirements, and then the SMF node sends seventh information which is used to reject the PDU session establishment request. If the path information of the user plane transmission path provided by the NWDAF node can include the current QoS information of the user plane transmission path, and the SMF node determines that at least one user plane transmission path does not meet the service requirements of the PDU session, then the SMF node sends the seventh information. Optionally, the path information of the user plane transmission path provided by the NWDAF node may include the QoS information of the user plane transmission path predicted by the NWDAF node for a certain period of time in the future. If the SMF node determines that at least one user plane transmission path cannot meet the service requirements of the PDU session in the future, the SMF node sends the seventh information. The SMF node sends the seventh information to the UE, notifying the UE that the SMF node rejects the PDU session establishment request of the UE. The seventh information can be forwarded to the UE through the AMF node.

After determining the first UPF node to provide service for the PDU session, the SMF node establishes the PDU session. The establishment of the PDU session by the SMF node may include but is not limited to establishing an N4 session with the first UPF node to obtain the CN tunnel information allocated by the first UPF node.

Optionally, the SMF node sends fourth information to the access network node, which is used to indicate the path type of the first user plane transmission path, where the first user plane transmission path is the user plane transmission path of the PDU session.

For example, satellite backhaul links are used for data transmission between the access network and the core network, and there are multiple types of satellite backhaul links (such as the GEO, the MEO, the LEO, and the LEO through the ISL). The SMF node can determine the path type of the transmission path based on the selected first UPF node and the first user plane transmission path of the UPF node. For example, the path type can be the GEO or the LEO, the SMF node indicates the path type through the fourth information, so that the access network node can determine the backhaul link to be used based on the path type. For example, the SMF node can send a Namf_Communication-NN2 message transfer message to the AMF node, where the message includes N2 SM information which may include the fourth information to notify the access network node of the path type of the PDU session. The N2 SM information also includes CN tunnel information allocated by the UPF node. The AMF node sends an N2 PDU session request message to the access network node, which includes the fourth information and CN tunnel information. After receiving the N2 PDU session request message, the access network node allocates AN tunnel information according to the path type indicated in the fourth information, and sends the AN tunnel information to the AMF node through the N2 PDU session request acknowledgement (ACK) message. Optionally, the access network node can assign different ports and/or tunnel endpoint identifiers (Tunnel Endpoint Identifiers, TEIDs) to the backhaul links corresponding to different path types. Based on the path type indicated by the fourth information, the access network node determines that the AN tunnel information includes the port and/or the tunnel endpoint identifier corresponding to that path type. When the data packet of the PDU session carries the AN tunnel information, the data packet can be transmitted to the access network node through the satellite link corresponding to the path type. But the present disclosure is not limited thereto. The access network node can also identify the backhaul link corresponding to the path type through other information in the AN tunnel information.

According to the above scheme, the SMF node can determine the path type that meets the service requirements according to the determined path information of the user plane transmission path and notify the access network node, which provides a reference for the access network node to select the backhaul link, thereby establishing the PDU session that meets the service requirements.

Optionally, the SMF node can send fifth information to the PCF node, which is used to request an update of the control policy and includes path information of the first user plane transmission path.

For example, based on the path information of the first user plane transmission path from the NWDAF node, the SMF node determines that the QoS of the first user plane transmission path of the PDU session has changed and cannot meet the requirements of the control policy (for example, the control policy can be a PCC rule). If the SMF node subscribes to the path information of the first user plane transmission path, the NWDAF node notifies the SMF node that the path information of the first user plane transmission path has changed. If the PCF node has sent a triggering condition for a policy control request to the SMF node, the SMF node determines that the triggering condition is met, for example, if the packet delay budget (Packet Delay Budget, PDB) of the first user plane transmission path changes and meets the triggering condition for the policy control request, the SMF node can initiate a policy association modification process to the PCF node and request the PDF node to update the control policy through the fifth information. The SMF node provides the path information of the first user plane transmission path obtained from the NWDAF node through the fifth information. The PCF node can update a control policy and send it to the SMF node based on the path information of the first user plane transmission path provided by the SMF node. The SMF node generates the QoS rules based on the control policy and sends the QoS rules to the access network node and the UE by invoking the NAMF_communication_N1N2 message transfer message.

For another example, the SMF node may initiate a control policy update process to the PCF node due to changes in the QoS parameters subscribed by the UE. The SMF node sends fifth information to the PCF node to request an update of the control policy, and carries the path information of the first user plane transmission path obtained from the NWDAF node in the fifth information, so that the PCF node can update the control policy based on the path information of the first user plane transmission path.

According to the above scheme, the SMF node can obtain path information at the user plane transmission path level from the NWDAF node, and select the UPF node and the user plane transmission path that meet service requirements for the PDU session based on the path information at the path level. And, when the SMF node requests the PCF node to update the control policy, it can provide the path information of the user plane transmission path to the PCF node, so that the PCF node can refer to the path information of the user plane transmission path provided by the SMF node, update the control policy, and obtain a control policy that matches a condition of the transmission path.

FIG. 6 is a schematic flowchart of a communication method 600 provided in an embodiment of the present disclosure. FIG. 6 provides a method for a NWDAF node to obtain path information at the user plane transmission path level. The communication method 600 includes but is not limited to the following steps.

S601, the NWDAF node sends eighth information to the network node, where the eighth information is used to subscribe to a QoS measurement result and a path type of a user plane transmission path.

Correspondingly, the network node receives the eighth information from the NWDAF node. Optionally, the eighth information may indicate one or more of opposite endpoint identification information of the transmission path, a type of transmission path, and a type of QoS measurement result requested (such as transmission bandwidth, data packet transmission delay information, a packet loss rate, etc.).

In one example, the network node may be a UPF node.

For example, the NWDAF node can subscribe to the QoS measurement results and the path types of the user plane transmission paths provided by the UPF node from the UPF node, so as to statistically obtain and/or predict path information of each user plane transmission path based on one or more QoS measurement results and path types at the user plane transmission path level provided by the UPF nodes.

In another example, the network node may be an operation administration and maintenance (Operation Administration and Maintenance, OAM) node.

For example, the OAM nodes can obtain QoS measurement results and path types at the user plane transmission path level in the network. The NWDAF node can subscribe to QoS measurement results and path types of user plane transmission paths from the OAM nodes through the eighth information, so that the NWDAF node can obtain QoS measurement results and path types at the user plane transmission path level from the OAM nodes, and based on the QoS measurement results and the path types, statistically obtain and/or predict path information of the user plane transmission paths.

S602, the network node sends ninth information to the NWDAF node, where the ninth information is used to indicate the QoS measurement result and the path type of the user plane transmission path.

Accordingly, the NWDAF node receives the ninth information from the network node and obtains the QoS measurement result and the path type of the user plane transmission path based on the ninth information.

S603, the NWDAF node determines the path information of the user plane transmission path based on the QoS measurement result and the path type of the user plane transmission path.

For a user plane transmission path, the NWDAF node can perform statistical analysis based on the obtained QoS measurement result and path type of the user plane transmission path to obtain the QoS information of the user plane transmission path, where the QoS information can be referred to as QoS statistical information. Moreover, the NWDAF node can also use an artificial intelligence model to perform artificial intelligence inference based on the obtained QoS measurement result of the user plane transmission path, to obtain the QoS information of the user plane transmission path in a certain period of time in the future, where the QoS information can be referred to as QoS prediction information. But the present disclosure is not limited thereto.

The NWDAF node can then determine the path information of the user plane transmission path based on the obtained QoS information and the path type. After receiving, from the SMF node, the second information to request the path information of at least one user plane transmission path, in response to the second information, the NWDAF node sends the path information of the at least one user plane transmission path statistically obtained and/or inferred by the NWDAF node to the SMF node.

According to the above scheme, the NWDAF node can obtain QoS measurement results and path types of various user plane transmission paths from the network, and based on the obtained QoS measurement results and path types, perform statistical analysis and/or inference prediction to obtain more accurate and diverse path information of user plane transmission paths. This enables the SMF node to obtain more accurate and diverse path information of user plane transmission paths from the NWDAF node, thereby improving the accuracy and efficiency of the SMF node in terms of session management.

It should be noted that in the various embodiments provided in the present disclosure, unless otherwise specified or logically conflicting, the terms and/or the descriptions between different examples are consistent and can be referenced to each other. The technical features in different embodiments can be combined to form new embodiments based on their inherent logical relationships.

FIG. 7 is a schematic block diagram of a communication apparatus provided in an embodiment of the present disclosure. This communication apparatus can correspond to the SMF node in the method embodiments described above, and is configured in the SMF node. The communication apparatus includes a transceiver 710, a processor 720, and a memory 730.

The transceiver 710 is configured to transmit and receive data under control of the processor 720.

Among them, in FIG. 7, a bus architecture may include any number of interconnected buses and bridges, specifically one or more processors represented by the processor 720 and various circuits of a memory represented by the memory 730 are linked together. The bus architecture can also link various other circuits such as peripheral devices, voltage regulators, and power management circuits together, which are well known in the field and are therefore not described further herein. The bus interface provides interfaces. The transceiver 710 can be multiple components, including a transmitter and a receiver, providing a unit for communicating with various other devices over transmission mediums, the transmission mediums include the transmission mediums include wireless channels, wired channels, optical cables, and other transmission mediums. The communication apparatus may also include a user interface 740, for different user equipment, the user interface 740 may also be an interface capable of external and internal connection of a required device, including but not limited to a small keyboard, a display, a speaker, a microphone, a joystick, etc.

The processor 720 is responsible for managing the bus architecture and usual processing, while the memory 730 can store data used by the processor 720 when performing operations.

Optionally, the processor 720 can be a CPU (central processing unit, central processing unit) or an ASIC (Application Specific Integrated Circuit, application specific integrated circuit), a FPGA (Field-Programmable Gate Array, field-programmable gate array), or a CPLD (Complex Programmable Logic Device, complex programmable logic device), and the processor can also be with a multicore architecture.

The processor, by invoking a memory-stored computer program, is configured to execute any of the methods provided in the embodiments of the present disclosure according to the executable instructions obtained. The processor and the memory can also be physically separated.

The processor 720, by invoking a computer program stored in the memory 730, is configured to perform the following operations according to the obtained executable instructions:
receiving first information from an NWDAF node, where the first information includes path information of at least one user plane transmission path, and the path information is used to indicate quality of service (QoS) information and a path type;
determining a first UPF node that provides a service for a protocol data unit (PDU) session based on the first information and service requirements of the PDU session, where the first UPF node meets the service requirements, and the at least one user plane transmission path includes a user plane transmission path associated with the first UPF node.

Optionally, in one implementation, the method further includes:
sending second information to the NWDAF node, where the second information is used to request the path information of the at least one user plane transmission path, and the second information includes identification information of the at least one user plane transmission path and/or identification information of at least one candidate UPF node, where the at least one user plane transmission path is a user plane transmission path associated with the at least one candidate UPF node, and the at least one candidate UPF node includes the first UPF node.

Optionally, in one implementation, the second information is carried in an analysis data subscription request message, or, the second information is carried in an analysis data request message.

Optionally, in one implementation, the sending the second information to the NWDAF node includes:
receiving third information, where the third information is PDU session establishment request information or PDU session update request information;
determining the at least one candidate UPF node based on the third information;
sending the second information to the NWDAF node.

Optionally, in one implementation, the method further includes:
establishing the PDU session, where a user plane transmission path of the PDU session is a first user plane transmission path associated with the first UPF node in the at least one user plane transmission path.

Optionally, in one implementation, the method further includes:
sending fourth information to an access network node, where the fourth information is used to indicate a path type of the first user plane transmission path.

Optionally, in one implementation, the method further includes:
sending fifth information to a policy control function (PCF) node, where the fifth information is used to request an update of a control policy, and the fifth information includes path information of the first user plane transmission path;
receiving sixth information from the PCF node, where the sixth information is used to indicate an updated control policy.

Optionally, in one implementation of the first aspect, the determining the first UPF node that provides a service for the PDU session based on the first information and the service requirements of the PDU session includes:
in the case where the at least one user plane transmission path includes a user plane transmission path that meets the service requirements, determining the first UPF node that provides a service for the PDU session based on the first information and the service requirements;
where the method further includes:
   in the case where the at least one user plane transmission path does not include the user plane transmission path that meets the service requirements, sending seventh information, where the seventh information is used to reject an establishment request of the PDU session.

FIG. 8 is another schematic block diagram of a communication apparatus provided in an embodiment of the present disclosure. The communication apparatus can correspond to the network device in the method embodiments described above, and is configured in the network device. The communication apparatus includes a transceiver 810, a processor 820, and a memory 830.

The transceiver 810 is configured to transmit and receive data under control of the processor 820.

Among them, in FIG. 8, a bus architecture may include any number of interconnected buses and bridges, specifically one or more processors represented by the processor 820 and various circuits of a memory represented by the memory 830 are linked together. The bus architecture can also link various other circuits such as peripheral devices, voltage regulators, and power management circuits together, which are well known in the field and are therefore not described further herein. The bus interface provides interfaces. The transceiver 810 can be multiple components, including a transmitter and a receiver, providing a unit for communicating with various other devices over transmission mediums, the transmission mediums include wireless channels, wired channels, optical cables, and other transmission mediums. The processor 820 is responsible for managing the bus architecture and usual processing, while the memory 830 can store data used by the processor 820 when performing operations.

The processor 820 can be a central processing unit (CPU) or an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor can also be with a multicore architecture.

The processor, by invoking a memory-stored computer program, is configured to execute any of the methods provided in the embodiments of the present disclosure according to the executable instructions obtained. The processor and the memory can also be physically separated.

The processor 820, by invoking a computer program stored in the memory 830, is configured to perform the following operations according to the obtained executable instructions:
sending first information to a SMF node, where the first information includes path information of at least one user plane transmission path, and the path information is used to indicate quality of service (QoS) information and a path type.

Optionally, in one implementation, the method further includes:
receiving second information from the SMF node, where the second information is used to request the path information of the at least one user plane transmission path, and the second information includes identification information of the at least one user plane transmission path and/or identification information of at least one candidate UPF node, where the at least one user plane transmission path is a user plane transmission path associated with the at least one candidate UPF node.

Optionally, in one implementation, the second information is carried in a data subscription request message, or, the second information is carried in a data request message.

Optionally, in one implementation, the method further includes:
sending eighth information to a network node, where the eighth information is used to subscribe to a QoS measurement result and a path type of the at least one user plane transmission path;
receiving ninth information from the network node, where the ninth information is used to indicate the QoS measurement result and the path type;
determining the path information of at least one user plane transmission path based on the QoS measurement result and the path type.

Optionally, in one implementation, the network node is a UPF node or an operation administration and maintenance node.

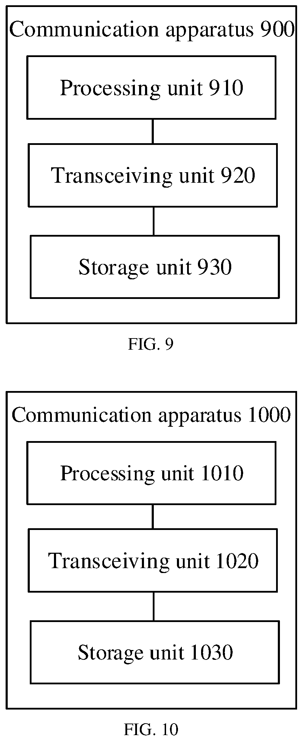

FIG. 9 is another schematic block diagram of a communication apparatus provided in an embodiment of the present disclosure. This communication apparatus can correspond to the terminal equipment in the method embodiments described above, and is configured in the terminal equipment or as the terminal equipment itself. The communication apparatus includes a processing unit 910, a transceiving unit 920, and a storage unit 930. Among them, the storage unit 930 can store data used by the processing unit 910 when performing operations.

The transceiving unit 920 is configured to receive first information from a NWDAF node, where the first information includes path information of at least one user plane transmission path, and the path information is used to indicate quality of service (QoS) information and a path type.
the processing unit 910 is configured to determine a first UPF node that provides a service for a protocol data unit (PDU) session based on the first information and service requirements of the PDU session, where the first UPF node meets the service requirements, and the at least one user plane transmission path includes a user plane transmission path associated with the first UPF node.

Optionally, in one implementation, the transceiving unit 920 is further configured to send second information to the NWDAF node, where the second information is used to request the path information of the at least one user plane transmission path, and the second information includes identification information of the at least one user plane transmission path and/or identification information of at least one candidate UPF node, where the at least one user plane transmission path is a user plane transmission path associated with the at least one candidate UPF node, and the at least one candidate UPF node includes the first UPF node.

Optionally, in one implementation, the second information is carried in an analysis data subscription request message, or, the second information is carried in an analysis data request message.

Optionally, in one implementation, the transceiving unit 920 is further configured to receive third information, where the third information is PDU session establishment request information or PDU session update request information;
the processing unit 910 is further configured to determine the at least one candidate UPF node based on the third information.

Optionally, in one implementation, the processing unit 910 is further configured to establish the PDU session, where a user plane transmission path of the PDU session is a first user plane transmission path associated with the first UPF node in the at least one user plane transmission path.

Optionally, in one implementation, the transceiving unit 920 is further configured to send fourth information to an access network node, where the fourth information is used to indicate a path type of the first user plane transmission path.

Optionally, in one implementation, the transceiving unit 920 is further configured to:
send fifth information to a policy control function (PCF) node, where the fifth information is used to request an update of a control policy, and the fifth information includes path information of the first user plane transmission path;
receive sixth information from the PCF node, where the sixth information is used to indicate an updated control policy.

Optionally, in one implementation, the processing unit 910 is specifically configured to determine the first UPF node that provides a service for the PDU session based on the first information and the service requirements, in the case where the at least one user plane transmission path includes a user plane transmission path that meets the service requirements;
the transceiving unit 910 is further configured to send seventh information, in the case where the at least one user plane transmission path does not include the user plane transmission path that meets the service requirements, where the seventh information is used to reject an establishment request of the PDU session.

FIG. 10 is another schematic block diagram of a communication apparatus provided in an embodiment of the present disclosure. The communication apparatus can correspond to the terminal equipment in the method embodiments described above, and is configured in the terminal equipment or as the terminal equipment itself. The communication apparatus includes a processing unit 1010, a transceiving unit 1020, and a storage unit 1030. Among them, the storage unit 1030 can store data used by processing unit 1010 when performing operations.

The processing unit 1010 is configured to determine first information, where the first information includes path information of at least one user plane transmission path, and the path information is used to indicate quality of service (QoS) information and a path type;
the transceiving unit 1020 is configured to send the first information to the SMF node.

Optionally, in one implementation, the transceiving unit is further configured to receive second information from the SMF node, where the second information is used to request the path information of the at least one user plane transmission path, and the second information includes identification information of the at least one user plane transmission path and/or identification information of at least one candidate UPF node, where the at least one user plane transmission path is a user plane transmission path associated with the at least one candidate UPF node.

Optionally, in one implementation, the second information is carried in a data subscription request message, or, the second information is carried in a data request message.

Optionally, in one implementation, the transceiving unit is further configured to send eighth information to a network node, where the eighth information is used to subscribe to a QoS measurement result and a path type of the at least one user plane transmission path; and receive ninth information from the network node, where the ninth information is used to indicate the QoS measurement result and the path type;
the processing unit is further configured to determine the path information of at least one user plane transmission path based on the QoS measurement result and the path type.

Optionally, in one implementation, the network node is a UPF node or an operation administration and maintenance node.

It should be noted here that the above apparatuses provided in the embodiments of the present disclosure can implement all the method steps implemented by the above method embodiments, and can achieve the same technical effects, and the parts and the beneficial effects of the embodiments which are same as those of the method embodiments are not detailed here for brevity.

It should be noted that division of the units in the embodiments of the present disclosure is schematic, which is merely logical function division and may be other division in actual implementations. In addition, various functional units in the embodiments of the present disclosure may be integrated into one processing unit, or each of the units may exist separately, or two or more units are integrated into one unit. The integrated unit may be implemented in a form of hardware, and may also be implemented in a form of a software functional unit.

If the integrated unit is implemented in the form of the software functional unit and sold or used as an independent product, the integrated unit may be stored in a processor-readable storage medium. Based on such understanding, a technical solution of the present disclosure essentially, or the part contributing to the prior art, or all or a part of the technical solution may be implemented in a form of a software product. The computer software product is stored in a storage medium and includes several instructions for causing a computer device (which may be a personal computer, a server, or a network device, etc.) or a processor (processor) to execute all or part of the steps of the methods described in the embodiments of the present disclosure. The foregoing storage medium includes: any medium that can store program codes, such as a USB flash disk, a mobile hard disk, a read-only memory (Read-Only Memory, ROM), a random access memory (Random Access Memory, RAM), a magnetic disk, or an optical disk, etc.

It should be noted here that the above apparatuses provided in the embodiments of the present invention can implement all the method steps implemented by the above method embodiments, and can achieve the same technical effects, and the parts and the beneficial effects of the embodiments which are same as those of the method embodiments are not detailed here for brevity. An embodiment of the present disclosure provides a processor-readable storage medium which stores a computer program, where the computer program is used to cause a processor to implement all the method steps implemented by the above method embodiments and achieve the same technical effects, and the parts and the beneficial effects of the embodiments which are same as those of the method embodiments are not detailed here for brevity.

The processor-readable storage medium may be any available medium or data storage device that can be accessed by a processor, including but not limited to a magnetic memory (such as a floppy disk, a hard disk, a magnetic tape, a magneto-optical disk (MO), etc.), an optical memory (such as a CD, a DVD, a BD, an HVD, etc.), and a semiconductor memory (such as a ROM, an EPROM, an EEPROM, a non-volatile memory (NAND FLASH), a solid state disk (SSD)), etc.

According to the method provided in the embodiment of the present disclosure, the present disclosure also provides a computer program product including a computer program code (or instructions). When executed by one or more processors, the computer program code causes an apparatus includes the processor(s) to implement all the method steps implemented by the above method embodiments and achieve the same technical effects, and the parts and the beneficial effects of the embodiments which are same as those of the method embodiments are not detailed here for brevity.

According to the method provided in the embodiment of the present disclosure, the present disclosure also provides a communication system including one or more network devices as described above. The system may further include one or more terminal devices as described above.

A person skilled in the art shall understand that, the embodiments of the present disclosure can be provided as a method, a system or a computer program product. Therefore, the present disclosure may adopt the form of an entirely hardware embodiment, an entirely software embodiment or an embodiment combining software and hardware. Furthermore, the present disclosure may adopt the form of a computer program product implemented on one or more computer-usable storage media (including but not limited to a disk memory, an optical memory, and the like) containing computer-usable program codes.

The present disclosure is described with reference to the flowcharts and/or block diagrams of the methods, the devices (systems) and the computer program products according to the embodiments of the present disclosure. It should be understood that, each flowchart and/or block in the flowcharts and/or block diagrams and combinations of flows and/or blocks in the flowcharts and/or block diagrams can be implemented by computer-executable instructions. The computer-executable instructions may be provided to a processor of a general-purpose computer, a special-purpose computer, an embedded processor or other programmable data processing devices to produce a machine, which enables instructions executed by a processor of a computer or other programmable data processing devices to generate an apparatus for implementing functions specified in one or more processes in the flowcharts and/or one or more blocks in the block diagrams.

These processor-executable instructions may also be stored in a processor-readable memory that can direct a computer or other programmable data processing devices to operate in a particular manner, so that the instructions stored in the processor-readable memory generate an article of manufacture including an instruction apparatus. The instruction apparatus implements functions specified in one or more processes in the flowcharts and/or one or more blocks in the block diagrams.

These processor-executable instructions may also be loaded into a computer or other programmable data processing devices, so that a series of operational steps are performed in the computer or the other programmable devices to generate computer-implemented processing. Thus, the instructions executed in the computer or the other programmable devices provide steps for implementing functions specified in one or more processes in the flowcharts and/or one or more blocks in the block diagrams.

In the embodiments of the present disclosure, under the premise of no logical contradiction, various embodiments can be referenced to each other, for example, methods and/or terms in the method embodiments can be referenced to each other, functions and/or terms in apparatus embodiments can be referenced to each other, and functions and/or terms in the apparatus embodiments and the method embodiments can be referenced to each other.

The above are specific implementations of the present disclosure, however, the protection scope of the present disclosure is not limited thereto. Any modification or replacement that may be readily conceived by persons skilled in the art within the technical scope disclosed in the present disclosure should fall into the protection scope of the present application. Therefore, the protection scope of the present disclosure should be subject to the protection scope of the claims.

## Claims

1. A communication method, **characterized by** comprising:
receiving first information from a network data analysis function NWDAF node, wherein the first information comprises path information of at least one user plane transmission path, and the path information is used to indicate quality of service(QoS) information and a path type;
determining a first UPF node that provides a service for a protocol data unit (PDU) session based on the first information and service requirements of the PDU session, wherein the first UPF node meets the service requirements, and the at least one user plane transmission path comprises a user plane transmission path associated with the first UPF node.

2. The method according to claim 1, wherein the method further comprises:
sending second information to the NWDAF node, wherein the second information is used to request the path information of the at least one user plane transmission path, and the second information comprises identification information of the at least one user plane transmission path and/or identification information of at least one candidate UPF node, wherein the at least one user plane transmission path is a user plane transmission path associated with the at least one candidate UPF node, and the at least one candidate UPF node comprises the first UPF node.

3. The method according to claim 2, wherein the second information is carried in a data subscription request message, or, the second information is carried in a data request message.

4. The method according to claim 2 or 3, wherein the sending the second information to the NWDAF node comprises:
receiving third information, wherein the third information is PDU session establishment request information or PDU session update request information;
determining the at least one candidate UPF node based on the third information;
sending the second information to the NWDAF node.

5. The method according to any one of claims 1 to 4, wherein the method further comprises:
establishing the PDU session, wherein a user plane transmission path of the PDU session is a first user plane transmission path associated with the first UPF node in the at least one user plane transmission path.

6. The method according to claim 5, wherein the method further comprises:
sending fourth information to an access network node, wherein the fourth information is used to indicate a path type of the first user plane transmission path.

7. The method according to claim 5 or 6, wherein the method further comprises:
sending fifth information to a policy control function (PCF) node, wherein the fifth information is used to request an update of a control policy, and the fifth information comprises path information of the first user plane transmission path;
receiving sixth information from the PCF node, wherein the sixth information is used to indicate an updated control policy.

8. The method according to any one of claims 1 to 7, wherein the determining the first UPF node that provides a service for the PDU session based on the first information and the service requirements of the PDU session comprises:
in the case where the at least one user plane transmission path comprises a user plane transmission path that meets the service requirements, determining the first UPF node that provides a service for the PDU session based on the first information and the service requirements;
wherein the method further comprises:
in the case where the at least one user plane transmission path does not comprise the user plane transmission path that meets the service requirements, sending seventh information, wherein the seventh information is used to reject an establishment request of the PDU session.

9. A communication method, **characterized by** comprising:
sending first information to a session management function SMF node, wherein the first information comprises path information of at least one user plane transmission path, and the path information is used to indicate quality of service (QoS) information and a path type.

10. The method according to claim 9, wherein the method further comprises:
receiving second information from the SMF node, wherein the second information is used to request the path information of the at least one user plane transmission path, and the second information comprises identification information of the at least one user plane transmission path and/or identification information of at least one candidate node, wherein the at least one user plane transmission path is a user plane transmission path associated with the at least one candidate UPF node.

11. The method according to claim 10, wherein the second information is carried in a data subscription request message, or, the second information is carried in a data request message.

12. The method according to any one of claims 9 to 11, wherein the method further comprises:
sending eighth information to a network node, wherein the eighth information is used to subscribe to a QoS measurement result and a path type of the at least one user plane transmission path;
receiving ninth information from the network node, wherein the ninth information is used to indicate the QoS measurement result and the path type;
determining the path information of at least one user plane transmission path based on the QoS measurement result and the path type.

13. The method according to claim 12, wherein the network node is a UPF node or an operation administration and maintenance node.

14. A communication apparatus, **characterized by** comprising a memory, a transceiver, and a processor;
wherein the memory is configured to store a computer program; the transceiver is configured to transmit and receive data under control of the processor; and the processor is configured to read the computer program from the memory to perform the following operations:
receiving first information from a network data analysis function (NWDAF) node, wherein the first information comprises path information of at least one user plane transmission path, and the path information is used to indicate quality of service (QoS) information and a path type;
determining a first UPF node that provides a service for a protocol data unit (PDU) session based on the first information and service requirements of the PDU session, wherein the first UPF node meets the service requirements, and the at least one user plane transmission path comprises a user plane transmission path associated with the first UPF node.

15. The apparatus according to claim 14, wherein the processor is configured to perform the following operation:
sending second information to the NWDAF node, wherein the second information is used to request the path information of the at least one user plane transmission path, and the second information comprises identification information of the at least one user plane transmission path and/or identification information of at least one candidate UPF node, wherein the at least one user plane transmission path is a user plane transmission path associated with the at least one candidate UPF node, and the at least one candidate UPF node comprises the first UPF node.

16. The apparatus according to claim 15, wherein the second information is carried in a data subscription request message, or, the second information is carried in a data request message.

17. The apparatus according to claim 15 or 16, wherein the sending the second information to the NWDAF node comprises:
receiving third information, wherein the third information is PDU session establishment request information or PDU session update request information;
determining the at least one candidate UPF node based on the third information;
sending the second information to the NWDAF node.

18. The apparatus according to any one of claims 14 to 17, wherein the processor is configured to perform the following operation:
establishing the PDU session, wherein a user plane transmission path of the PDU session is a first user plane transmission path associated with the first UPF node in the at least one user plane transmission path.

19. The apparatus according to claim 18, wherein the processor is configured to perform the following operation:
sending fourth information to an access network node, wherein the fourth information is used to indicate a path type of the first user plane transmission path.

20. The apparatus according to claim 19 or 20, wherein the processor is configured to perform the following operations:
sending fifth information to a policy control function (PCF) node, wherein the fifth information is used to request an update of a control policy, and the fifth information comprises path information of the first user plane transmission path;
receiving sixth information from the PCF node, wherein the sixth information is used to indicate an updated control policy.

21. The apparatus according to any one of claims 14 to 20, the determining the first UPF node that provides a service for the PDU session based on the first information and the service requirements of the PDU session comprises:
in the case where the at least one user plane transmission path comprises a user plane transmission path that meets the service requirements, determining the first UPF node that provides a service for the PDU session based on the first information and the service requirements;
wherein the processor is further configured to perform the following operation:
in the case where the at least one user plane transmission path does not comprise the user plane transmission path that meets the service requirements, sending seventh information, wherein the seventh information is used to reject an establishment request of the PDU session.

22. A communication apparatus, **characterized by** comprising a memory, a transceiver, and a processor;
wherein the memory is configured to store a computer program; the transceiver is configured to transmit and receive data under control of the processor; and the processor is configured to read the computer program from the memory to perform the following operation:
sending first information to a session management function (SMF) node, wherein the first information comprises path information of at least one user plane transmission path, and the path information is used to indicate quality of service (QoS) information and a path type.

23. The apparatus according to claim 22, wherein the processor is configured to perform the following operation:
receiving second information from the SMF node, wherein the second information is used to request the path information of the at least one user plane transmission path, and the second information comprises identification information of the at least one user plane transmission path and/or identification information of at least one candidate UPF node, wherein the at least one user plane transmission path is a user plane transmission path associated with the at least one candidate UPF node.

24. The apparatus according to claim 23, wherein the second information is carried in a data subscription request message, or, the second information is carried in a data request message.

25. The apparatus according to any one of claims 22 to 24, wherein the processor is configured to perform the following operations:
sending eighth information to a network node, wherein the eighth information is used to subscribe a QoS measurement result and a path type of the at least one user plane transmission path;
receiving ninth information from the network node, wherein the ninth information is used to indicate the QoS measurement result and the path type;
determining the path information of at least one user plane transmission path based on the QoS measurement result and the path type.

26. The apparatus according to claim 25, wherein the network node is a UPF node or an operation administration and maintenance node.

27. A communication apparatus, **characterized by** comprising:
a transceiving unit, configured to receive first information from a network data analysis function NWDAF node, wherein the first information comprises path information of at least one user plane transmission path, and the path information is used to indicate quality of service (QoS) information and a path type;
a processing unit, configured to determine a first node that provides a service for a protocol data unit PDU session based on the first information and service requirements of the PDU session, wherein the first UPF node meets the service requirements, and the at least one user plane transmission path comprises a user plane transmission path associated with the first UPF node.

28. The apparatus according to claim 27, wherein the transceiving unit is further configured to:
send second information to the NWDAF node, wherein the second information is used to request the path information of the at least one user plane transmission path, and the second information comprises identification information of the at least one user plane transmission path and/or identification information of at least one candidate UPF node, wherein the at least one user plane transmission path is a user plane transmission path associated with the at least one candidate UPF node, and the at least one candidate UPF node comprises the first UPF node.

29. The apparatus according to claim 28, wherein the second information is carried in a data subscription request message, or, the second information is carried in a data request message.

30. The apparatus according to claim 28 or 29, wherein the transceiving unit is further configured to:
receive third information, wherein the third information is PDU session establishment request information or PDU session update request information;
wherein the processing unitis further configured to:
determine the at least one candidate UPF node based on the third information.

31. The apparatus according to any one of claims 27 to 30, wherein the processing unit is further configured to:
establish the PDU session, wherein a user plane transmission path of the PDU session is a first user plane transmission path associated with the first UPF node in the at least one user plane transmission path.

32. The apparatus according to claim 31, wherein the transceiving unit is further configured to:
send fourth information to an access network node, wherein the fourth information is used to indicate a path type of the first user plane transmission path.

33. The apparatus according to claim 31 or 32, wherein the transceiving unit is further configured to:
send fifth information to a policy control function PCF node, wherein the fifth information is used to request an update of a control policy, and the fifth information comprises path information of the first user plane transmission path;
receive sixth information from the PCF node, wherein the sixth information is used to indicate an updated control policy.

34. The apparatus according to any one of claims 27 to 33, wherein the processing unit is specifically configured to:
determine the first UPF node that provides a service for the PDU session based on the first information and the service requirements, in the case where the at least one user plane transmission path comprises a user plane transmission path that meets the service requirements;
the transceiving unit is further configured to:
send seventh information, in the case where the at least one user plane transmission path does not comprise the user plane transmission path that meets the service requirements, wherein the seventh information is used to reject an establishment request of the PDU session.

35. A communication apparatus, **characterized by** comprising:
a processing unit, configured to determine first information, wherein the first information comprises path information of at least one user plane transmission path, and the path information is used to indicate quality of service QoS information and a path type;
a transceiving unit, configured to send the first information to a session management function (SMF) node.

36. The apparatus according to claim 35, wherein the transceiving unit is further configured to:
receive second information from the SMF node, wherein the second information is used to request the path information of the at least one user plane transmission path, and the second information comprises identification information of the at least one user plane transmission path and/or identification information of at least one candidate node, wherein the at least one user plane transmission path is a user plane transmission path associated with the at least one candidate UPF node.

37. The apparatus according to claim 36, wherein the second information is carried in a data subscription request message, or, the second information is carried in a data request message.

38. The apparatus according to any one of claims 35 to 37, wherein the transceiving unit is further configured to:
send eighth information to a network node, wherein the eighth information is used to subscribe to a QoS measurement result and a path type of the at least one user plane transmission path;
receive ninth information from the network node, wherein the ninth information is used to indicate the QoS measurement result and the path type;
the processing unit is further configured to:
determine the path information of at least one user plane transmission path based on the QoS measurement result and the path type.

39. The apparatus according to claim 38, wherein the network node is a UPF node or an operation administration and maintenance node.

40. A processor readable storage medium, **characterized in that** the processor readable storage medium stores a computer program for causing the processor to perform the method according to any one of claims 1 to 13.
